(19) Europäisches Patentamt
European Patent Office
Office européen des brevets

(11) **EP 0 731 911 B1**

(12) **EUROPÄISCHE PATENTSCHRIFT**

(45) Veröffentlichungstag und Bekanntmachung des Hinweises auf die Patenterteilung:
**04.02.1998 Patentblatt 1998/06**

(21) Anmeldenummer: **95900656.0**

(22) Anmeldetag: **24.11.1994**

(51) Int Cl.⁶: **G01N 27/419**

(86) Internationale Anmeldenummer:
**PCT/DE94/01383**

(87) Internationale Veröffentlichungsnummer:
**WO 95/15490 (08.06.1995 Gazette 1995/24)**

(54) **SAUERSTOFFMESSFÜHLER**

OXYGEN SENSOR

DETECTEUR D'OXYGENE

(84) Benannte Vertragsstaaten:
**DE FR GB IT**

(30) Priorität: **01.12.1993 DE 4340875**

(43) Veröffentlichungstag der Anmeldung:
**18.09.1996 Patentblatt 1996/38**

(73) Patentinhaber: **ROBERT BOSCH GMBH**
**70442 Stuttgart (DE)**

(72) Erfinder: **GRUENWALD, Werner**
**D-70839 Gerlingen (DE)**

(56) Entgegenhaltungen:
**EP-A- 0 144 057      EP-A- 0 188 900**
**DE-A- 3 728 618      DE-A- 3 744 206**
**US-A- 4 657 659**

**Beschreibung**

Stand der Technik

Die Erfindung geht aus von einem Sauerstoffmeßfühler nach der Gattung des Hauptanspruchs. Die gattungsgemäßen Sauerstoffmeßfühler arbeiten nach dem Diffusionsgrenzstromprinzip, wobei der Grenzstrom bei einer konstanten, an den beiden Elektroden des Sensorelements anliegenden Spannung, gemessen wird. Dieser Strom ist in einem bei Verbrennungsmotoren entstehenden Abgas von der Sauerstoffkonzentration so lange abhängig, wie die Diffusion des Gases zur Pumpelektrode die Geschwindigkeit der ablaufenden Reaktion bestimmt. Es ist bekannt, zum Beispiel aus der DE-A 37 28 618, derartige nach dem polarographischen Meßprinzip arbeitende Sensoren in der Weise aufzubauen, daß sowohl Anode als auch Kathode dem zu messenden Gasgemisch ausgesetzt sind, wobei die Kathode eine Diffusionsbarriere aufweist, um ein Arbeiten im Diffusionsgrenzstrombereich zu ermöglichen. Derartige Grenzstromsensoren eignen sich zur Bestimmung des Lambda-Wertes in Gasgemischen mit Sauerstoffüberschuß, d. h. in mageren Gasgemischen.

An die Elektroden der Pumpzelle wird ein elektrisches Potential ausreichender Größe angelegt, um den zwischen Pumpelektrode und Festelektrolyt vorhandenen Sauerstoff so abzureichen, daß der gemessene Strom eine Funktion des durch die Poren der Pumpelektrode hinduchdiffundierenden Sauerstoffs ist. Entsprechend den Strom/Spannungs-Kennlinien von Grenzstromsonden ist der Strom unabhängig von der anliegenden Spannung und wird nur noch vom Konzentrationsgradienten vor der Pumpelektrode, d. h. von der Sauerstoff-konzentration im Gasgemisch, bestimmt. Die Strom/Spannungs-Kennlinien beginnen zunächst mit einem relativ steilen Anstieg, der vorwiegend durch den ohmschen Widerstand der Sonde bestimmt wird. Der sich anschließende waagerechte Teil der Kurve ist der Grenzstrombereich, der bei guten Sonden möglichst parallel zur Abszisse verlaufen muß. Insbesondere bei höheren Sauerstoff-Konzentrationen kommt es zu Abweichungen vom parallelen Verlauf der Kurve, bei dem dann keine strenge Linearität mehr zwischen Strom und Konzentration vorhanden ist. Es hängt von der Größe des Diffusionswiderstandes und von der Belastbarkeit der Pumpelektroden ab, bis zu welchen Konzentrationen eine ausreichende Linearität vorhanden ist.

Vorteile der Erfindung

Der erfindungsgemäße Sauerstoffmeßfühler mit den kennzeichnenden Merkmalen des Hauptanspruchs hat demgegenüber den Vorteil, daß ein linearer Verlauf des Sondensignals über der Sauerstoffkonzentration im Gasgemisch selbst bei hohen Sauerstoffkonzentrationen vorliegt. Dies führt zu einer verbesserten Arbeitsgenauigkeit des Sauerstoffmeßfühlers über den gesamten Bereich der zu messenden Konzentrationen in einem mageren Abgas. Darüber hinaus wird die Ansprechbarkeit bei dynamischem Druckwechselverhalten deutlich verbessert, worauf später noch eingegangen wird.

Mit den in den Unteransprüchen aufgeführten Maßnahmen sind vorteilhafte Weiterbildungen des erfindungsgemäßen Sauerstoffmeßfühlers möglich. Das Meßsignal auch bei hohen Sauerstoffkonzentrationen aus dem den ohmschen Gesetz folgenden Teil der Strom/Spannungs-Kennlinie abzunehmen, ist dadurch erreichbar, daß sich die innere Pumpelektrode im Diffusionskanal entlang der Diffusionsrichtung erstreckt. Durch das Zusammenlegen der Anoden der Pumpzelle und der Meßzelle ist die Anzahl der Elektrodenanschlüsse reduzierbar. Der Betrieb des Sauerstoffmeßfühlers im ohmschen Bereich der Strom/Spannungs-Kennlinie macht es außerdem möglich, daß zur Kalibrierung des Sauerstoffmeßfühlers lediglich ein Trimmwiderstand ausreicht.

Zeichnung

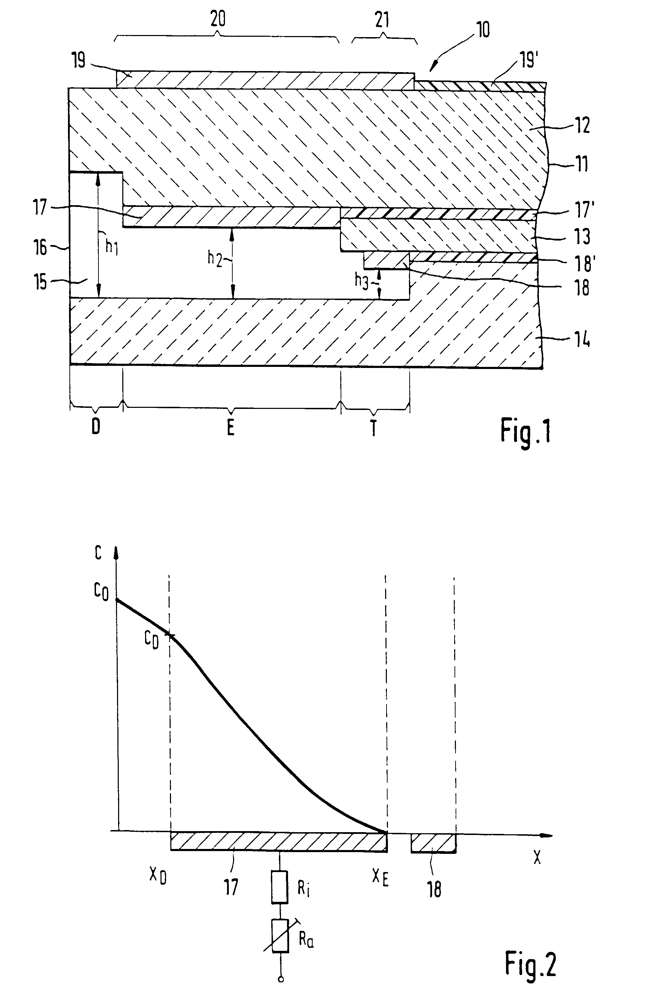

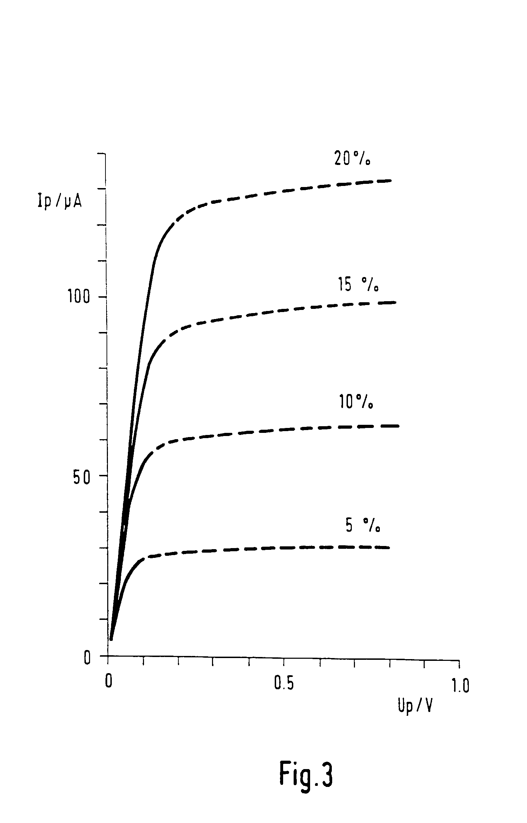

Ein Ausführungsbeispiel der Erfindung ist in der Zeichnung dargestellt und in der nachfolgenden Beschreibung näher erläutert. Es zeigen Figur 1 einen Längsschnitt durch einen meßgasseitigen Teil des erfindungsgemäßen Sauerstoffmeßfühlers, Figur 2 den Verlauf der Sauerstoffkonzentration entlang des Diffusionskanals des Sauerstoffmeßfühlers gemäß Figur 1 und Figur 3 die Strom/Spannungs-Kennlinie einer Grenzstromsonde.

Ausführungsbeispiel

Der Sauerstoffmeßfühler 10 hat gemäß Figur 1 einen Festelektrolytträger 11 mit einem Diffusionskanal 15, welcher eine Diffusionsöffnung 16 zum Gasgemisch hin aufweist. Der Festlelektrolytträger 11 ist beispielsweise aus drei übereinander angordneten Festelektrolytfolien 12, 13 und 14 aufgebaut. Der Diffusionskanal 15 ist in Diffusionsrichtung abgestuft aufgebaut und besitzt eine Diffusionsstrecke D mit einer Diffusionsstreckenhöhe $h_1$, eine Pumpstrecke E mit einer Pumpstreckenhöhe $h_2$ und einen Testraum T mit einer Testraumhöhe $h_3$, wobei die Diffusionsstreckenhöhe $h_1$ größer ist als die Pumpstreckenhöhe $h_2$ und die Pumpstreckenhöhe $h_2$ wiederum größer als die Testraumhöhe $h_3$. Es sind jedoch auch Ausführungsformen möglich, bei denen die Diffusionsstreckenhöhe $h_1$ und die Pumpstreckenhöhe

h$_2$ oder alle drei Höhen h$_1$, h$_2$ und h$_3$ gleich groß sind. Es ist ebenfalls denkbar, auf die Diffusionsstrecke D zu verzichten.

Im Diffusionskanal 15 ist im Bereich der Pumpstrecke E eine als Kathode geschaltete innere Pumpelektrode 17 angeordnet. In Diffusionrichtung hinter der inneren Pumpelektrode 17 ist im Testraum T eine Testelektrode 18 positioniert. Außerhalb des Diffusionskanals 15 ist der Pumpelektrode 17 und der Testelektrode 18 gegenüberliegend auf dem Festelektrolytträger 11 eine ebenfalls dem Gasgemisch ausgesetzte, als Anode geschaltete äußere Pumpelektrode 19 vorgesehen. Zwischen den Festelektrolytfolien 12, 13 und 14 liegen jeweils Leiterbahnen 17', 18' und 19', die zu den jeweiligen Elektroden 17, 18 und 19 und zu nicht dargestellten üblichen Anschlüssen geführt sind. Die Leiterbahnen 17', 18' und 19' sind zweckmäßigerweise mit nicht dargestellten Isolationsschichten gegenüber den Festelektrolytfolien 12, 13, 14 elektrisch isoliert.

Die innere Pumpelektrode 17 und die äußere Pumpelektrode 19 bilden eine Pumpzelle 20 und die Testelektrode 18 mit der äußeren Pumpelektrode 19 eine Meßzelle 21. Es ist aber genauso denkbar, die zweite Elektrode der Meßzelle 21 getrennt von der Pumpelektrode 19 anzuordnen. Bei dieser Ausführungsform ist es außerdem denkbar, diese zweite Elektrode in einem zusätzlichen Referenzkanal anzuordnen und einem Referenzgas auszusetzen. In diesem Fall ist ein Sauerstoffmeßfühler realisierbar, der zur Messung der Sauerstoff-konzentration vom mageren bis ins fette Abgas geeignet ist.

Aus Figur 3 gehen die Strom/Spannungs-Kennlinien eines nach dem Grenzstromprinzip arbeitenden Sauerstoffmeßfühlers bei verschiedenen Sauerstoffkonzentrationen hervor. Der bei niedrigen Spannungswerten U$_p$ vorliegende relativ steile Verlauf wird vorwiegend durch den ohmschen Widerstand und die Polarisation der Elektroden des Sauerstoffmeßfühlers bestimmt. Der sich daran anschließende, gestrichelt dargestellte Teil der Kurven ist der Grenzstrombereich, der, wie bereits eingangs erwähnt, insbesondere bei höheren Konzentrationen nicht mehr parallel zur Abszisse verläuft und damit keine strenge Linearität zwischen Strom I$_p$ und Konzentration vorhanden ist. Der dem Ohmschen Gesetz gehorchende Teil der Kennlinien bei niedrigen Spannungswerten U$_p$ hingegen verläuft linear. Der erfindungsgemäße Sauerstoffmeßfühler nutzt diesen ohmschen Bereich der Kennlinie zur Detektierung eines Meßsignals, wobei vorteilhafterweise ebenfalls der Pumpstrom I$_P$ als Meßsignal herangezogen wird. Es ist aber gleichfalls denkbar, aufgrund des Ohmschen Gesetzes, die Pumpspannung U$_P$ als Meßsignal zu verwenden.

Über die sich in Diffusionsrichtung flächenhaft erstreckende innere Pumpelektrode 17 wird der Sauerstoff aufgrund der an sich bekannten katalytischen Reaktion über eine Sauerstoffionenleitung durch den Festelektrolytträger 11 zur äußeren Pumpelektrode 19 gepumpt und dort in das Gasgemisch wieder freigesetzt. Dabei wird der Pumpstrom I$_P$ der Pumpzelle 20 so eingestellt, daß im Testraum T an der Testelektrode 18 ein Sauerstoffpartialdruck von 10$^{-10}$ bis 10$^{-12}$ bar herrscht, welcher $\lambda = 1$ entspricht. Wird beispielsweise die Meßzelle 21 als zweite Pumpzelle geschaltet, wird der einstellbare Konzentrationsbereich bei $\lambda = 1$ dadurch erfaßt, daß der Pumpstrom in diesem Bereich zwischen der Elektrode 18 und der äußeren Pumpelektrode 19 null ist.

Bei der bereits angesprochene Ausführungsform, bei der die Meßzelle 21 als Nernstzelle mit einer einem Referenzgas ausgesetzten Referenzelektroden geschaltet ist, wird als Signal für den Bereich $\lambda = 1$ die EMK von beispielsweise 450 mV aufgenommen. Mit dieser Ausführungsform ist es möglich, den Sauerstoffmeßfühler als Breitbandsensor auszulegen, wobei bei jedem Erreichen von $\lambda = 1$ eine Umpolung der Pumpzelle 20 erfolgt, so daß entweder bei magerem Abgas Sauerstoff aus dem Diffusionskanal 15, wie beschrieben, heraus oder bei einem fetten Abgas Sauerstoff in den Diffusionskanal 15 hineingepumpt wird. Bei letzterer Pumprichtung wird als Sensorsignal ein anodischer Pumpstrom gemessen, der ebenfalls im ohmschen Bereich angesiedelt ist.

Der Verlauf der Sauerstoffkonzentration C über dem Diffusionsweg X im Diffusionskanal 15 geht aus Figur 2 hervor. Danach nimmt die Sauerstoff-Konzentration C$_0$ an der Diffusionskanalöffnung 16 bis hin zum Beginn der Pumpstrecke E bis auf die Konzentration C$_D$ linear ab. Der Beginn der Pumpstrecke E ist mit dem Diffusionsweg X$_D$ bezeichnet. Innerhalb der Pumpstrecke E verläuft die Sauerstoffkonzentration C parabelförmig bis ans Ende der Pumpstrecke E, das mit X$_E$ bezeichnet ist. An der Stelle X$_E$ hat die Sauerstoff-konzentration C den Bereich von $\lambda = 1$ mit einem Sauerstoffpartialdruck von 10$^{-10}$ bis 10$^{-12}$ bar erreicht. Der gleiche Sauerstoffpartialdruck liegt somit im Testraum T an der Testelektrode 18 vor.

Der Verlauf der Konzentration in der Pumpstrecke E kann durch folgende Funktion beschrieben werden:

$$C(x) = \frac{j}{z \cdot F \cdot D \cdot h_2} \left( \frac{x^2}{2} - X \cdot X_E + \frac{X_E^2}{2} \right) \qquad (1)$$

mit z = 4 (Valenz des Sauerstoffs gemäß der kathodischen Reaktion)

$$4e + O_2 \rightarrow 2O^{2-} \tag{2}$$

F = Faradayzahl = 96 400 A s/mol
D = Diffusionskoeffizient
j = Pumpstromdichte = i/(b · e)
mit Gesamtpumpstrom i, b = Breite der Pumpstrecke,
e = Länge der Pumpstrecke.

Für die Sauerstoffkonzentration C im Gasgemisch mit dem Pumpstrom $I_P$ im geregelten Zustand ergibt sich der Zusammenhang:

$$C = \frac{i}{z \cdot F \cdot D \cdot b} \left( \frac{E}{2h_2} - \frac{D}{h_1} \right) \tag{3}$$

Bei Gleichung (3) muß betont werden daß die Pumpelektrode 17 nicht im Grenzstrombereich arbeitet und damit für $I_P$ das Ohmsche Gesetz

$$I_P = U_P/R \tag{4}$$

gilt, mit

$U_P$ = angelegte Pumpspannung,
$I_P$ = Pumpstrom der Pumpzelle 20,
R = Widerstand des Pumpkreises, der sich aus dem Widerstand $R_1$ der Pumpzelle und einem äußeren Trimmwiderstand $R_a$ zusammensetzt:

$$R = R_i + R_a$$

Aus Gleichung (3) wird damit:

$$C = \frac{U_P}{R_i + R_a} \cdot \frac{\frac{X_E}{2h_2} - \frac{D}{h_1}}{z \cdot F \cdot D \cdot b} \tag{5}$$

Aus Gleichung (5) wird deutlich, daß sich zwischen der Sauerstoff-konzentration C und der sich einstellenden Pumpspannung $U_P$ ein exakter linearer Zusammenhang einstellt. Der Proportionalitätsfaktor enthält die geometrischen Größen $(X_E/2h_2 - D/h_1)/b$ sowie $R_i$, die entsprechenden Fertigungsschwankungen unterworfen sind. Zum Kalibrieren des Sauerstoffmeßfühlers ist der in einem Ersatzschaltbild in Figur 2 dargestellte Trimmwiderstand $R_a$ vorgesehen, der den Proportionalitätsfaktor auf einen konstanten Wert einstellt. Der lineare Zusammenhang zwischen Sauerstoffkonzentration C und Pumpspannung $U_P$ gemäß Gleichung (5) bedeutet gleichzeitig einen linearen Zusammenhang zwischen Sauerstoffkonzentration C und Pumpstrom $I_P$.

Beim Betreiben des Sauerstoffmeßfühlers wird nun von einer nicht dargestellten Regelungsschaltung das Erreichen der Sauerstoffkonzentration bei $\lambda = 1$ von der Testelektrode 18 erfaßt. Mit dem Erreichen von $\lambda = 1$ wird von der Regelungsschaltung der über die Pumpzelle 20 fließende Pumpstrom $I_P$ gemessen und entsprechend ausgewertet. Es wird dabei nicht, wie bei den üblichen Grenzstromsonden, die Pumpspannung $U_P$ derart weiter erhöht, bis die Pumpzelle 20 in den Grenzstrombereich kommt, der in Figur 3 als gestrichelte Linie dargestellt ist. Wenn die Testelektrode 18 auf einen Sauerstoffpartialdruck für $\lambda = 1$ eingestellt ist, liegt auch das Ende $X_E$ der flächenhaften Pumpelektrode 17 zumindest in der Nähe dieser Konzentration. Zur Diffusionsöffnung 16 hin steigt die Konzentration gemäß

EP 0 731 911 B1

Figur 2 weiter an. Dadurch liegen an der Pumpelektrode 17 im äußersten Fall lediglich am Ende $X_E$ der Pumpelektrode 17 Grenzstrombedingungen vor. Der über die gesamte Elektrodenfläche der Pumpelektrode 17 gemessene Pumpstrom $I_P$ hingegen erreicht nicht den Grenzstrombereich und bleibt somit im ohmschen Bereich der Kennlinie gemäß Figur 3. Wird der Sauerstoffmeßfühler im fetten Abgas eingesetzt, gilt der Konzentrationsverlauf gemäß Figur 2 für die oxidierbaren Gasbestandteile, wie beispielsweise CO und $NO_x$.

**Patentansprüche**

1.  Sauerstoffmeßfühler mit einer auf einem sauerstoffionenleitenden Festelektrolyt angeordneten Pumpzelle mit einer äußeren und einer inneren Pumpelektrode, von denen die innere Pumpelektrode in einem Diffusionskanal dem Meßgas ausgesetzt ist, dadurch gekennzeichnet, daß im Diffusionskanal (15) in Diffusionsrichtung hinter der inneren Pumpelektrode (17) eine weitere Elektrode (18) angeordnet ist, an welcher mittels der Pumpzelle (20) ein Sauerstoffpartialdruck einstellbar ist, der zumindest annähernd $\lambda = 1$ entspricht.

2.  Sauerstoffmeßfühler nach Anspruch 1, dadurch gekennzeichnet, daß sich die innere Pumpelektrode (17) im Diffusionskanal (15) entlang der Diffusionsrichtung flächenhaft erstreckt, so daß an dem in Diffusionsrichtung liegenden Ende ($X_E$) der Pumpelektrode (17) zumindest annähernd der an der Elektrode (18) sich einstellende Sauerstoffpartialdruck anliegt.

3.  Sauerstoffmeßfühler nach Anspruch 1, dadurch gekennzeichnet, daß der Diffusionskanal (15) eine Pumpstrecke (E) mit einer Pumpstreckenhöhe ($h_2$) und einen Testraum (T) mit einer Testraumhöhe ($h_3$) aufweist, wobei die Pumpstreckenhöhe ($h_2$) größer ist als die Testraumhöhe ($h_3$).

4.  Sauerstoffmeßfühler nach Anspruch 3, dadurch gekennzeichnet, daß im Diffusionskanal (15) der Pumpstrecke (E) eine Diffusionsstrecke (D) mit einer Diffusionshöhe ($h_1$) meßgasseitig vorgeschaltet ist.

5.  Sauerstoffmeßfühler nach Anspruch 1, dadurch gekennzeichnet, daß die Pumpelektrode (17) einen Trimmwiderstand ($R_a$) aufweist, mit dem der Gesamtwiderstand der Pumpzelle (20) einstellbar ist.

**Claims**

1.  Oxygen sensor having, arranged on a solid electrolyte that conducts oxygen ions, a pump cell having one outer and one inner pump electrode, of which the inner pump electrode is exposed in a diffusion channel to the gas to be measured, characterized in that a further electrode (18) is arranged in the diffusion channel (15), behind the inner pump electrode (17) in the diffusion direction, at which electrode an oxygen partial pressure which at least approximately corresponds to $\lambda = 1$ can be set by means of the pump cell (20).

2.  Oxygen sensor according to Claim 1, characterized in that the inner pump electrode (17) extends extensively along the diffusion direction in the diffusion channel (15), so that the oxygen partial pressure at the end ($X_E$) of the pump electrode (17) that lies in the diffusion direction is at least approximately the same as the oxygen partial pressure being set at the electrode (18).

3.  Oxygen sensor according to Claim 1, characterized in that the diffusion channel (15) has a pump path (E) having a pump-path height ($h_2$) and a test space (T) having a test-space height ($h_3$), the pump-path height ($h_2$) being greater than the test-space height ($h_3$).

4.  Oxygen sensor according to Claim 3, characterized in that, on the side corresponding to the gas to be measured, a diffusion path (D) having a diffusion height ($h_1$) is connected in front of the pump path (E) in the diffusion channel (15).

5.  Oxygen sensor according to Claim 1, characterized in that the pump electrode (17) has a trimming resistor ($R_a$), using which it is possible to adjust the overall resistance of the pump cell (20).

5

## EP 0 731 911 B1

**Revendications**

1. Sonde de mesure d'oxygène comprenant une cellule de pompage montée sur un électrolyte solide à ions conducteurs d'oxygène, comprenant une électrode de pompage extérieure et une électrode de pompage intérieure, l'électrode intérieure étant exposée au gaz de mesure dans un canal de diffusion,
   caractérisée en ce que
   derrière l'électrode de pompage interne (17), il est prévu une autre électrode (18) dans le canal de diffusion (15), selon le sens de la diffusion, et sur cette électrode on règle une pression partielle d'oxygène à l'aide de la cellule de pompage (20), cette pression partielle correspondant au moins sensiblement à la valeur $\lambda = 1$.

2. Sonde de mesure d'oxygène selon la revendication 1,
   caractérisée en ce que
   l'électrode de pompage intérieure (17) s'étend en surface dans le canal de diffusion (15) le long de la direction de diffusion pour que l'extrémité ($X_E$) de l'électrode de pompage (17) qui se situe dans la direction de diffusion, reçoive au moins approximativement la pression partielle d'oxygène qui s'établit sur l'électrode (18).

3. Sonde de mesure d'oxygène selon la revendication 1,
   caractérisée en ce que
   le canal de diffusion (15) comporte un chemin de pompage (E) avec une hauteur de chemin de pompage ($h_2$ et une chambre de contrôle (T) de hauteur ($h_3$), la hauteur de chemin de pompage ($h_2$) étant supérieure à la hauteur de la chambre de contrôle ($h_3$).

4. Sonde de mesure d'oxygène selon la revendication 3,
   caractérisée par
   un chemin de diffusion (D) d'une hauteur de diffusion ($h_1$), en amont du côté du gaz de mesure dans le canal de diffusion (15) du chemin de pompage (E).

5. Sonde de mesure d'oxygène selon la revendication 1,
   caractérisée en ce que
   l'électrode de pompage (17) présente une résistance de réglage ($R_a$) permettant de régler la résistance totale de la cellule de pompage (20).

Fig.1

Fig.2

Fig.3